# EUROPÄISCHE PATENTSCHRIFT

(11) **EP 0 282 764 B1**
(45) Veröffentlichungstag und Bekanntmachung des Hinweises auf die Patenterteilung: **27.01.1993**
(21) Anmeldenummer: 88102547.2
(22) Anmeldetag: 22.02.1988
(51) Int. Cl.: H02P 1/52, H02P 6/00, H02P 6/02

(54) **Schaltungsanordnung zum Betreiben eines mehrphasigen Synchronmotors an einem Gleichspannungsnetz**
Circuit arrangement for D.C. mains operated multiphase synchronous motor
Arrangement de circuit pour alimenter du réseau de tension continu d'un moteur synchrone à courant polyphasé

(30) Priorität: 20.03.1987 DE 3709168
(43) Veröffentlichungstag der Anmeldung: 21.09.1988
(73) Patentinhaber: ROBERT BOSCH GMBH, 70442 Stuttgart (DE)
(72) Erfinder: Pfeiffer, Rüdiger, Dr., D-7580 Bühl (DE)

(56) Entgegenhaltungen:
- EP-A- 0 174 741
- DE-C- 1 488 765

## Beschreibung

Die Erfindung geht aus von einer Schaltungsanordnung zum Betreiben eines eine mehrphasige Ankerwicklung aufweisenden Synchronmotors an einem Gleichspannungsnetz der im Oberbegriff des Anspruchs 1 definierten Art, wie sie in der EP-A 174 741 beschrieben ist. Diese bekannte Schaltungsanordnung besitzt einen Spannungs-Frequenz-Wandler, welcher eine Logikstufe steuert, die ihrerseits die einzelnen, den Wicklungsphasen der Ankerwicklung vorgeschalteten Schaltelemente in der erforderlichen Reihenfolge leitend schaltet. Die Überwachung des Motorstromes erfolgt mittels eines Shunts, dessen Spannungsabfall zusammen mit einer definiert ansteigenden Rampenspannung über ein Summierglied auf einen Spannungs-Frequenz-Wandler zur Steuerung der Leistungsschalter aufgeschaltet wird. Die Rampenspannung wird dabei so bemessen, daß der Motor jeweils der Spannungserhöhung mit seiner Drehzahl folgen kann.

Bei einer anderen bekannten Schaltungsanordnung für einen vierphasigen Synchronmotor (DE-OS 30 42 819) ist die Schaltvorrichtung zum sukzessiven Anschließen der einzelnen Wicklungsphasen der vierphasigen Ankerwicklung durch Stromventile realisiert, von denen jeweils eines in Reihe mit einer Wicklungsphase der hier im Ständer angeordneten Ankerwicklung geschaltet ist und zwischen dem einen Wicklungsphasenende und dem Nullpotential liegt. Die anderen Wicklungsphasenenden der Ankerwicklung sind zu einem Sternpunkt zusammengefaßt und über einen Netzschalter an dem Pluspotential des Gleichspannungsnetzes angeschlossen.

Der Schaltsignalgenerator und die Logikstufe zum folgerichtigen Ansteuern der Stromventile sind durch Spannungskomparatoren, durch logische Verknüpfungsglieder und durch einen Ringzähler realisiert, dessen parallele Zählausgänge mit den Steuereingängen der Stromventile verbunden sind. In den Spannungskomparatoren werden jeweils die infolge gesperrter Stromventile in zyklisch aufeinanderfolgenden Wicklungsphasen induzierten Spannungen miteinander verglichen und jeweils ein Ausgangssignal dann ausgegeben, wenn die in der zyklisch folgenden Wicklungsphase induzierte Spannung größer als die in der zyklisch vorgehenden Wicklungsphase induzierte Spannung ist. Diese Ausgangssignale der Spannungskomparatoren sind mit den Zählerausgangssignalen des Ringzählers logisch "und" -verknüpft derart, daß ein Schaltsignal an ein Monoflop dann und nur dann gelangt, wenn die der Wicklungsphase mit der höheren induzierten Spannung zyklisch folgende Wicklungsphase durch Öffnen des zugeordneten Stromventils stromdurchflossen ist. Der mit dem Steuereingang dieses Stromventils verbundene Ausgang des Ringzählers führt hierzu High-Potential. Mit der positiven Flanke des Ausgangsimpulses des Monoflops wird der Ringzähler um eins weitergezählt, so daß nunmehr High-Potential an dem nächsten Zählerausgang liegt und das momentan geöffnete Stromventil gesperrt und das zyklisch folgende Stromventil geöffnet wird.

Da im Stillstand des Rotors oder Läufers des Synchronmotors keine Informationen über dessen Stellung vorhanden sind, ist ein Hilfstaktgenerator vorgesehen, der den Ringzähler zum Anlauf des Motors startet und in sehr langsamen Schritten von z.B. 0,5 sec weiterschaltet. Sobald Drehrichtung des Rotors, Zählerstand des Ringzählers und Spannungsschnittpunkte der induzierten Wechselspannungen zusammenpassen, geht der Synchronmotor in die Selbststeuerung über und beschleunigt mit maximalem Drehmoment bis auf die Betriebsdrehzahl.

### Vorteile der Erfindung

Die erfindungsgemäße Schaltungsanordnung mit den kennzeichnenden Merkmalen des Anspruchs 1 hat den Vorteil, relativ einfach zu sein und ohne aufwendige Elektronik für Spannungsvergleich und logischer Verknüpfung auszukommen. Infolge des durch das Anlaufglied bewirkten allmählichen Ansteigens der Eingangsspannung des Spannungs-Frequenz-Wandlers beim Einschalten und nach Außertrittfallen des Synchronmotors generiert der Spannungs-Frequenz-Wandler Schaltimpulse, deren Folgefrequenz von Null aus allmählich zunimmt. Die Schaltimpulse bewirken zunächst ein nur sehr langsames zyklisches Fortschalten der Schaltvorrichtung in der Ankerwicklung, so daß der Rotor sich mit Sicherheit ausrichten kann und in die vorgeschriebene Drehrichtung anläuft. Der Rotor wird zunehmend schneller gedreht, bis er bei Anliegen der maximal möglichen Spannung am Eingang des Spannungs-Frequenz-Wandlers die Synchrondrehzahl erreicht. Fällt der Motor außer Tritt, so wird das Startglied aktiviert, das die Spannung am Eingang des Spannungs-Frequenz-Wandlers kurzzeitig auf Null absenkt und dann wieder zeitabhängig bis auf den Spannungsendwert anwachsen läßt. Der Rotor läuft wieder bis in den Synchronismus.

Die erfindungsgemäße Schaltungsanordnung ist sehr einfach aufgebaut. Der Spannungs-Frequenz-Wandler kann gemäß dem Ausführungsbeispiel der Erfindung nach Anspruch 4 als spannungsgesteuerter Oszillator (VCO) und das Anlaufglied kann gemäß dem Ausführungsbeispiel der Erfindung in Anspruch 2 als einfacher Kondensator ausgebildet werden, der beim Einschalten und nach Außertrittfallen des Motors über einen Widerstand von Null aus auf eine vorgegebene Endspannung aufgeladen wird. Die Wiederanlaufeinheit wird gemäß dem Ausführungsbeispiel der Erfindung nach Anspruch 3 durch einen NAND-Schmitt-Trigger mit zwei logischen Eingängen realisiert, von denen der eine mit einer von dem Motorstrom abgeleiteten Steuerspannung und der andere mit einer der Kondensatorspannung proportionalen Steuerspannung belegt ist. Bei Außertrittfallen des Motors erreicht infolge des starken Anstiegs des Motorstroms die von diesem abgeleitete Steuerspannung die Einschaltschwelle des Schmitt-Triggers. Dieser schaltet bei aufgeladenem Kondensator durch und legt den Steuereingang des VCO an Null. Der Kondensator wird kurzgeschlossen und entladen, wobei die an dem Schmitt-Trigger liegende, von der Kondensatorspannung abgeleiteten Steuerspannung in gleicher Weise absinkt. Sobald diese Steuerspannung die Ausschaltschwelle des Schmitt-Trigger unterschreitet, sperrt der Schmitt-Trigger wieder und der Aufladevorgang des Kondensators und der damit verbundene Anlaufvorgang des Rotors setzt ein. Die Logikschaltung kann gemäß der Ausführungsform der Erfindung in Anspruch 7 durch einen einfachen Ringzähler realisiert werden, an dessen Zähleingang die Rechteckimpulse des VCO mittelbar oder unmittelbar als Zählimpulse anstehen.

### Zeichnung

Die Erfindung ist anhand eines in der Zeichnung dargestellten Ausführungsbeispiels in der nachfolgenden Beschreibung näher erläutert. Es zeigen:
- Fig. 1: ein Prinzipschaltbild einer Schaltungsanordnung zum Betreiben eines Synchronmotors an einem Gleichspannungsnetz,
- Fig. 2 und 3: jeweils ein Diagramm des Spannungsverlaufs der Steuerspanungen an den beiden logischen Eingängen eines NAND-Schmitt-Triggers der Schaltungsanordnung in Fig. 1 bei Einschalten (Fig.2) und Außertrittfallen (Fig.3) des Synchronmotors.

### Beschreibung des Ausführungsbeispiels

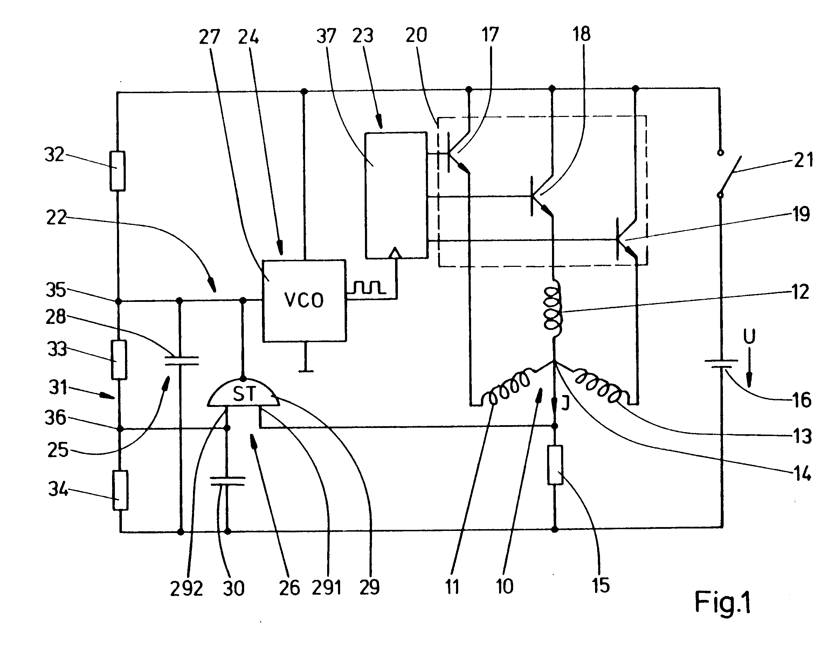

In dem in Fig. 1 dargestellten Prinzipschaltbild zum Betreiben eines Synchronmotors an einem Gleichspannungsnetz ist die im Ständer des Synchronmotors angeordnete Ankerwicklung mit 10 bezeichnet. Im Ausführungsbeispiel ist die Ankerwicklung dreiphasig mit den Wicklungssträngen 11,12 und 13 ausgeführt. Eine andere Phasenzahl ist jedoch möglich. Der nicht dargestellte Rotor des Synchronmotors ist mindestens zweipolig und mit Permanentmagneten bestückt. Die einen Enden der Wicklungsphasen 11,12,13 sind zu einem Sternpunkt 14 zusammengefaßt und über einen Widerstand 15 mit dem negativen Potential eines Gleichspannungsnetzes verbunden, das in Fig. 1 durch die Gleichspannungsquelle 16 repräsentiert wird. Die anderen Enden der Wicklungsphasen 11 - 13 sind über jeweils ein elektronisches Stromventil 17,18,19 einer Schaltvorrichtung 20 und über einen Ein-/Ausschalter 21 mit dem positiven Potential des Gleichspannungsnetzes 16 verbunden. Die elektronischen Stromventile 17 - 19 können z.B. als Leistungstransistoren oder Leistungs-Endverstärker ausgebildet sein. Durch entsprechende Ansteuerung der Schaltvorrichtung 20 werden die einzelnen Wicklungsphasen 11 - 13 der Ankerwicklung 10 sukzessive an das Gleichspannungsnetz 16 angeschlossen.

Zum Ansteuern der Schaltvorrichtung 20 weist die Schaltungsanordnung einen Schaltsignalgenerator 22 zum Erzeugen von Schaltsignalen für die Schaltvorrichtung und eine zwischen dem Schaltsignalgenerator 22 und der Schaltvorrichtung 20 eingeschaltete Logikstufe 23 auf, die für die folgerichtige Belegung der Schaltvorrichtung mit den Schaltsignalen sorgt. Der Schaltsignalgenerator 22 weist einen Spannungs-Frequenz-Wandler 24, ein diesem vorgeschaltetes Anlaufglied 25 und eine nach Hochlaufen des Synchronmotors wirksame Wiederanlaufeinheit 26 auf. Der Spannungs-Frequenz-Wandler 24, der hier als spannungsgesteuerter Oszillator 27, im folgenden kurz VCO 27 genannt, ausgebildet ist, erzeugt an seinem Ausgang eine Rechteckimpulsfolge, deren Impulsfolgefrequenz abhängig von der Spannungshöhe am Steuereingang des VCO 27 ist. Das Anlaufglied 25 wird einerseits mit Einschalten der Netzgleichspannung, also mit Schließen des Ein-/Ausschalters 21, und andererseits durch die Wiederanlaufeinheit 26 gestartet. Mit Start des Anlaufgliedes 25 wächst die Spannung am Eingang des Spannungs-Frequenz-Wandlers 24 bzw. am Steuereingang des VCO 27 von Null aus auf einen Vorgabewert an.

Das Anlaufglied 25 wird von einem Kondensator 28 gebildet, der über mindestens einen Widerstand aufgeladen wird. Die Kondensatorspannung liegt als Steuerspannung am Steuereingang des VCO 27. Die Wiederanlaufeinheit 26 besteht aus einen invertierenden Schmitt-Trigger 29 mit zwei logischen Eingängen 291 und 292. An dem einen Eingang 291 liegt eine am Widerstand 15 zwischen Sternpunkt 14 der Ankerwicklung 10 und dem Nullpotential des Gleichspannungsnetzes 16 abgegriffene Steuerspannung, die proportional dem Motorstrom ist. An dem Eingang 292 liegt eine der Kondensatorspannung des Kondensators 28 proportionale Steuerspannung, die durch einen Kondensator 30 generiert wird. Der Ausgang des Schmitt-Triggers 29 ist mit dem Steuereingang des VCO 27 verbunden, an dem auch der eine Kondensatoranschluß des Kondensators 28 liegt. Zum Auf- und Entladen der Kondensatoren 28 und 30 ist ein Spannungsteiler 31 mit den Widerständen 32 - 34 und den beiden Spannungsabgriffen 35,36 über den Ein-/Ausschalter 21 an das Gleichspannungsnetz 16 angeschlossen. Der potentialhöhere erste Spannungsabgriff 35 des Spannungsteilers 31 ist mit dem Steuereingang des VCO 27, mit dem Ausgang des Schmitt-Triggers 29 und mit dem damit verbundenen Kondensatoranschluß des Kondensators 28 verbunden. Der potentialniedrigere Spannungsabgriff 36 liegt zusammen mit dem einen Kondensatoranschluß des Kondensators 30 an dem zweiten logischen Eingang 292 des Schmitt-Triggers 29. Der jeweils andere Kondensatoranschluß der beiden Kondensatoren 28,30 ist mit dem Nullpotential des Gleichspannungsnetzes 16 verbunden. Die Logikstufe 23 ist als einfacher Ringzähler 37 mit drei parallelen Ausgängen ausgebildet. Die drei Ausgänge sind mit den Steuereingängen der drei Stromventile 17,18,19 verbunden. Die Rechteckimpulse des VCO 27 liegen als Zählimpulse an dem Zähl- oder Takteingang des Ringzählers 37. Mit jedem Zählimpuls zählt der Ringzähler 37 einen Schritt weiter, wobei sukzessive die Ausgangspotentiale an den einzelnen Ausgängen des Ringzählers 37 von logisch L auf logische H und umgekehrt umschalten. Immer nur ein Zählausgang führt H-Potential. Wird der Zählerstand "3" erreicht, so wird der Ringzähler 37 automatisch zurückgesetzt.

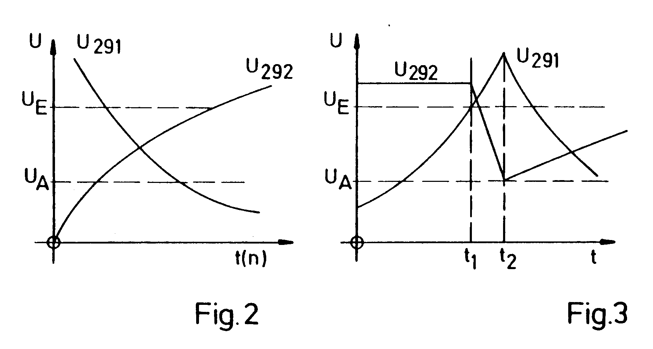

Die Wirkungsweise der vorstehend beschriebenen Schaltungsanordnung ist wie folgt:
Bei geöffnetem Ein-/Ausschalter 21 steht der Synchronmotor still und die Kondensatoren 28,30 sind entladen. Mit Schließen des Ein-/Ausschalters 21 wird der Motor eingeschaltet. Über den Spannungsteiler 31 wird der Kondensator 28 und auch der Kondensator 30 aufgeladen. Der Spannungsverlauf am Kondensator 30 ist in Fig. 2 über der Zeit t bzw. Drehzahl n des Synchronmotors dargestellt und mit U₂₂₉ bezeichnet. Der Spannungsverlauf am Kondensator 28 ist dazu etwa proportional. Die Steuerspannung des VCO 27 nimmt damit von Null aus allmählich zu, bis sie ihren durch den Spannungsteiler 31 bestimmten Endwert erreicht hat. Der VCO 27 erzeugt Rechteckimpulse, deren Folgefrequenz allmählich anwächst. Damit wird der Ringzähler 37 zunächst sehr langsam und zunehmend schneller fortgeschaltet. Die Wicklungsphasen 11 - 13 der Ankerwicklung 10 werden nacheinander und mit zunehmender Schnelligkeit über das jeweils leitende Stromventil 17 - 19 an die Netzgleichspannung gelegt. Da die Fortschaltung der einzelnen Wicklungsphasen 11 - 13 zunächst sehr langsam erfolgt, kann sich der Rotor mit Sicherheit ausrichten und mit dem nur langsam fortschreitenden Drehfeld in die richtige Drehrichtung drehen. Der Rotor beschleunigt mit zunehmender Frequenz der Rechteckimpulse, der damit zunehmenden Frequenz der Weiterschaltung der Wicklungsphasen 11 - 13 und des damit schneller umlaufenden Drehfeldes. Ist der durch den Spannungsteiler 31 vorgegebene Maximalwert der Kondensatorspannung am Kondensator 28 erreicht, so hat die Rechteckimpulsfolge des VCO 27 eine konstante Impulsfolgefrequenz und der Rotor läuft mit synchroner Drehzahl um.

Beim Anlauf wird der Widerstand 15 zwischen dem Sternpunkt 14 der Ankerwicklung 10 und dem Nullpotential des Gleichspannungsnetzes 16 von dem relativ hohen Einschaltstrom I durchflossen, der mit zunehmender Drehzahl n des Rotors abnimmt. Der Spannungsverlauf am Widerstand 15 und damit am logischen Eingang 291 des Schmitt-Triggers 29 ist ebenfalls in Fig. 2 dargestellt und mit U₂₉₁ bezeichnet. Außerdem ist in Fig. 2 die Einschaltspannung U_{E} und die Ausschaltspannung U_{A} des Schmitt-Triggers 29 strichliniert eingezeichnet. Wird die Einschaltspanung U_{E} an beiden Steuereingängen 291,292 überschritten, so schaltet der Schmitt-Trigger 29 ein, und sein Ausgang wird logisch "O". Unterschreitet eine der beiden Steuerspannungen U₂₉₁, U₂₉₂ die Ausschaltspannung U_{A} des Schmitt-Triggers 29, so schaltet dieser wieder aus, und das Potential an seinem Ausgang nimmt wieder logisch "l" an. Wie Fig. 2 zeigt, wird beim Einschalten des Motors letztere Bedingung erfüllt, so daß der Schmitt-Trigger 29 stets ausgeschaltet bleibt.

Fällt der Synchronmotor nach Hochlaufen oder irgendwann während des Betriebs außer Tritt, so steigt der Motorstrom I, der den Widerstand 15 durchfließt, sehr stark an. Der Verlauf der Steuerspannungen an den beiden logischen Eingängen 291 und 292 ist für diesen Fall in Fig. 3 dargestellt. Die vom Kondensator 30 angelegte Steuerspannung U₂₉₂ ist wegen der konstanten Aufladung des Kondensators 30 zunächst konstant und größer als die Einschaltspannung U_{E} des Schmitt-Triggers 29, während die an dem Widerstand 15 abgegriffene Spannung U₂₉₁ mit dem zunehmenden Motorstrom I anwächst und schließlich im Punkte t₁ die Einschaltspannung U_{E} des Schmitt-Triggers 29 ebenfalls übersteigt. Der Schmitt-Trigger 29 schaltet in diesem Moment ein und legt den Steuereingang des VCO 27 auf Null. Damit werden die Kondensatoren 28 und 30 entladen. Während die Steuerspannung U₂₉₁ mit dem Motorstrom I weiter ansteigt, sinkt die Steuerspannung U₂₉₂ mit dem Entladen des Kondensators 30 relativ schnell ab und unterschreitet zum Zeitpunkt t₂ die Ausschaltspannung U_{A} des Schmitt-Triggers 29. Damit schaltet der Schmitt-Trigger 29 wieder ab, und die Kondensatoren 28 und 30 werden über den Spannungsteiler 31 wieder aufgeladen. Die anwachsende Steuerspannung am Steuereingang des VCO 27 läßt die Frequenz der Zählimpulse am Ringzähler 37 wieder anwachsen, wodurch der Synchronmotor wieder hochläuft und schließlich in den Synchronismus fällt. Die Steuerspannung U₂₉₂ fällt mit dem abnehmenden Motorstrom I wie in Fig. 2 wieder ab, während die Steuerspannung U₂₉₂ mit Aufladen des Kondensators 30 wie in Fig. 2 wieder zunimmt.

Die Erfindung ist nicht auf das beschriebene Ausführungsbeispiel beschränkt. So kann die Schaltvorrichtung 20 drei parallele Reihenschaltungen aus jeweils zwei Leistungstransistoren aufweisen, die über einen gemeinsamen Widerstand 15 und über den Ein-/Ausschalter 21 an das Gleichspannungsnetz 16 angeschlossen sind. Die einen Wicklungsenden der Wicklungsphasen 11 - 13 der Ankerwicklung 10 sind wiederum zu einem Sternpunkt 14 zusammengefaßt, während die anderen Wicklungsenden jeweils mit drei Anschlußpunkten verbunden sind, von denen jeweils einer zwischen den beiden Leistungstransistoren in jeder Reihenschaltung liegt. Die Leistungstransistoren werden wiederum von dem Schaltsignalgenerator 22 mit Logikstufe 23 gesteuert, wobei jeweils zwei Leistungstransistoren, die mit aufeinanderfolgenden Wicklungsphasen 11 - 13 verbunden sind, gleichzeitig leitend werden und damit immer zwei Wicklungsphasen in Reihe geschaltet sind und über den Widerstand 15 an dem Gleichspannungsnetz liegen. An dem gemeinsamen Widerstand 15 ist wiederum die eine Steuerspannung U₂₉₁ des Schmitt-Triggers 29 abgegriffen.

## Patentansprüche

1. Schaltungsanordnung zum Betreiben eines eine mehrphasige Ankerwicklung aufweisenden Synchronmotors an einem Gleichspannungsnetz, mit einer Schaltvorrichtung (20) zum sukzessiven Anschließen der einzelnen Wicklungsphasen (11, 12, 13) der Ankerwicklung an die Netzgleichspannung (16), mit einem Schaltsignalgenerator (22) zum Erzeugen von Schaltsignalen für die Schaltvorrichtung (20), mit einer zwischen Schaltvorrichtung und Schaltsignalgenerator eingeschalteten Logikstufe (37) zum folgerichtigen Belegen der Schaltvorrichtung (20) mit Schaltsignalen, mit einem Spannungs-Frequenz-Wandler (24), der eine Rechteckimpulsfolge mit einer von der Spannungshöhe abhängigen Impulsfolgefrequenz erzeugt, und mit einem dem Spannungs-Frequenz-Wandler (24) vorgeschaltetes Anlaufglied (25), das mit Einschalten der Netzgleichspannung startet und dem Spannungs-Frequenz-Wandler (24) eine von Null in seinem Startzeitpunkt an zeitabhängig auf einen Vorgabewert anwachsende Spannung zuführt, gekennzeichnet durch eine nach Hochlaufen des Motors wirksame Wiederanlaufeinheit (26), die bei Überschreiten eines Vorgabewertes des Motornennstromes, zum Beispiel infolge Außertrittfallens des Motors, das Anlaufglied (25) erneut startet.

2. Schaltungsanordnung nach Anspruch 1, dadurch gekennzeichnet, daß das Anlaufglied (25) von einem über mindestens einen Widerstand (31) aufladbaren Kondensator (28) gebildet ist, dessen Kondensatorspannung dem Spannungs-Frequenz-Wandler (24) zugeführt ist.

3. Schaltungsanordnung nach Anspruch 2, dadurch gekennzeichnet, daß die Wiederanlaufeinheit (26) einen invertierenden Schmitt-Trigger (29) mit zwei logischen Eingängen (291,292) aufweist, dessen Ausgang am Spannungseingang des Spannungs-Frequenz-Wandlers (24) angeschlossen und dessen eine Eingang (291) mit einer von dem Motorstrom (I) abgeleiteten Steuerspannung (U₂₉₁) und dessen anderer Eingang (292) mit einer zur Kondensatorspannung etwa proportionalen Steuerspannung (U₂₉₂) belegt ist.

4. Schaltungsanordnung nach Anspruch 2 oder 3, dadurch gekennzeichnet, daß der Spannungs-Frequenz-Wandler (24) als spannungsgesteuerter Oszillator (27) ausgebildet ist, dessen Steuerspannung von der Kondensatorspannung abgeleitet ist.

5. Schaltungsanordnung nach Anspruch 4, dadurch gekennzeichnet, daß an dem Gleichspannungsnetz (16) ein Spannungsteiler (31) mit zwei Spannungsabgriffen (35,36) angeschlossen ist, daß mit dem potentialhöheren ersten Spannungsabgriff (35) der Steuereingang des Oszillators (27) und der eine Anschluß des Kondensators (28) und mit dem potentialniedrigeren zweiten Spannungsabgriff (36) ein zugleich an dem einen Eingang (292) des Schmitt-Triggers (29) angeschlossener Anschluß eines zweiten Kondensators (30) verbunden ist und daß der jeweils andere Anschluß der beiden Kondensatoren (28,30) an Nullpotential liegt.

6. Schaltungsanordnung nach einem der Ansprüche 3 - 5, dadurch gekennzeichnet, daß zwischen dem Sternpunkt (14) der Ankerwicklung (10) einerseits und dem Nullpotential oder Pluspotential des Gleichspannungsnetzes (16) andererseits ein Widerstand (15) eingeschaltet ist, dessen Spannungsabfall als Steuerspannung (U₂₉₁) an dem einen Eingang (291) des Schmitt-Triggers (29) liegt.

7. Schaltungsanordnung nach einem der Ansprüche 4 - 6, dadurch gekennzeichnet, daß die Schaltvorrichtung (20) eine der Phasenzahl der Ankerwicklung entsprechende Zahl von elektronischen Stromventilen (17 - 19) aufweist, von denen jeweils eines in Reihe mit einer Wicklungsphase (11 - 13) der Ankerwicklung (10) liegt, und daß die Logikstufe (23) einen Ringzähler (37) mit einer der Phasenzahl der Ankerwicklung (10) entsprechenden Zählkapazität aufweist, dessen parallele Zählerausgänge mit den Steuereingängen der Stromventile (17 - 19) verbunden sind und an dessen Zähleingang die vom Oszillator (27) ausgegebenen Rechteckimpulse mittel- oder unmittelbar als Zählimpulse anstehen.

## Claims

1. Circuit arrangement for operating a synchronous motor, exhibiting a multi-phase armature winding, on a direct-voltage power system, with a switching device (20) for successively connecting the individual winding phases (11, 12, 13) of the armature winding to the power-system direct voltage (16), with a switching signal generator (22) for generating switching signals for the switching device (20), with a logic stage (37), inserted between switching device and switching signal generator, for consequentially applying switching signals to the switching device (20), with a voltage/frequency converter (24) which generates a squarewave pulse sequence with a pulse repetition rate dependent on the voltage amplitude, and with a start-up section (25) which precedes the voltage/frequency converter (24) and which starts when the power-system direct voltage is switched on and supplies the voltage/frequency converter (24) with a voltage which increases time-dependently from zero at its starting time to a predetermined value, characterised by a restarting unit (26) which is effective after the motor has accelerated and which restarts the start-up section (25) when a predetermined value of the rated motor current is exceeded, for example due to the motor falling out of step.

2. Circuit arrangement according to Claim 1, characterised in that the start-up section (25) is formed by a capacitor (28), which can be charged up via at least one resistor (31) and the capacitor voltage of which is supplied to the voltage/frequency converter (24).

3. Circuit arrangement according to Claim 2, characterised in that the restarting unit (26) exhibits an inverting Schmitt trigger (29) with two logic inputs (291, 292), the output of which is connected to the voltage input of the voltage/frequency converter (24) and one input (291) of which has applied to it a control voltage (U₂₉₁) derived from the motor current (I) and the other input (292) of which has applied to it a control voltage (U₂₉₂) which is approximately proportional to the capacitor voltage.

4. Circuit arrangement according to Claim 2 or 3, characterised in that the voltage/frequency converter (24) is constructed as voltage-controlled oscillator (27), the control voltage of which is derived from the capacitor voltage.

5. Circuit arrangement according to Claim 4, characterised in that a voltage divider (31) with two voltage taps (35, 36) is connected to the direct-voltage power system (16), in that the first voltage tap (35) having the higher potential is connected to the control input of the oscillator (27) and to one terminal of the capacitor (28) and the second voltage tap (36) having the lower potential is connected to a terminal of a second capacitor (30), which terminal is at the same time connected to one input (292) of the Schmitt trigger (29), and in that the respective other terminal of the two capacitors (28, 30) is connected to zero potential.

6. Circuit arrangement according to one of Claims 3 - 5, characterised in that between the neutral point (14) of the armature winding (10), on the one hand, and the zero potential or positive potential of the direct-voltage power system (16), on the other hand, a resistor (15) is inserted, the voltage drop of which is applied as control voltage (U₂₉₁) to one input (291) of the Schmitt trigger (29).

7. Circuit arrangement according to one of Claims 4 - 6, characterised in that the switching device (20) exhibits a number of electronic current valves (17 - 19) which corresponds to the number of phases of the armature winding, one of which current valves is in each case connected in series with one winding phase (11 - 13) of the armature winding (10), and in that the logic stage (23) exhibits a ring counter (37) with a counting capacity corresponding to the number of phases of the armature winding (10) and the parallel counter outputs of which are connected to the control inputs of the current valves (17 - 19) and at the counting input of which the squarewave pulses output by the oscillator (27) are present directly or indirectly as counting pulses.

## Revendications

1. Arrangement de circuit pour l'exploitation sur un réseau de tension continue d'un moteur synchrone comportant un enroulement d'induit polyphasé, avec un dispositif de commutation (20) pour raccorder successivement les différentes phases (11, 12, 13) de l'enroulement d'induit à la tension continue du réseau (16), avec un générateur de signal de commutation (22) pour produire des signaux de commutation pour le dispositif de commutation (20), avec un étage logique (37) branché entre le dispositif de commutation et le générateur de signaux de commutation pour l'application en ordre correct des signaux de commutation au dispositif de commutation (20), avec un convertisseur tension-fréquence (24) qui produit une succession d'impulsions rectangulaires avec une fréquence de succession dépendant du niveau de la tension, et avec un organe de mise en route (25) branché en amont du convertisseur tension-fréquence (24) et qui démarre avec l'enclenchement de la tension continue du réseau et amène au convertisseur tension-fréquence (24) une tension croissant en fonction du temps à partir de zéro à l'instant de démarrage jusqu'à une voleur prédéfinie, arrangement de circuit caractérisé en ce qu'il comporte une unité de remise en route (26) agissant après l'emballement du moteur, et qui lors du dépassement d'une valeur prédéfinie du courant nominale du moteur, par exemple par suite du décrochage du moteur, démarre à nouveau l'organe de mise en route (25).

2. Arrangement de circuit selon la revendication 1, caractérisé en ce que l'organe de mise en route (25) est constitué par un condensateur (28) susceptible d'être chargé par l'intermédiaire d'au moins une résistance (31), tandis que la tension de ce condensateur est appliquée au convertisseur tension-fréquence (24).

3. Arrangement de circuit selon la revendication 2, caractérisé en ce que l'unité de remise en route (26) comporte un déclencheur de Schmitt inverseur (29) avec deux entrées logiques (291, 292), dont la sortie est raccordée à l'entrée de tension du convertisseur tension-fréquence (24), tandis que l'une de ces entrées (291) reçoit une tension de commande (U₂₉₁) dérivée du courant I du moteur et que son autre entrée (292) reçoit une tension de commande (U₂₉₂) à peu près proportionnelle à la tension du condensateur.

4. Arrangement de circuit selon la revendication 2 ou la revendication 3, caractérisé en ce que le convertisseur tension-fréquence (24) revêt la forme d'un oscillateur commandé en tension (27) dont la tension de commande est dérivée de la tension du condensateur.

5. Arrangement de circuit selon la revendication 4, caractérise' en ce qu'au réseau de tension continue (16) est raccordé un diviseur de tension (31) avec deux prises de tension (35, 36), en ce qu'à la première prise de tension (35) de potentiel plus élevé, est reliée l'entrée de commande de l'oscillateur (27) et l'un des raccordements du condensateur (28) tandis qu'à la seconde prise de tension (36) de potentiel plus bas, est relié un raccordement, simultanément relié à l'une des entrées (292) du déclencheur de Schmitt (29), d'un second condensateur (30) et en ce que l'autre raccordement respectif des deux condensateurs (28, 30) est au potentiel zéro.

6. Arrangement de circuit selon une des revendications 3 à 5, caractérisé an ce qu'entre le point neutre (14) de l'enroulement d'induit (10) d'une part, et le potentiel zéro ou le potentiel positif du réseau de tension continue (16) d'autre part, est branchée une résistance (15) dont la chute de tension s'applique en tant que tension de commande (U₂₉₁) à l'une des entrées (291) du déclencheur de Schmitt (29).

7. Arrangement de circuit selon une des revendications 4 à 6, caractérisé en ce que le dispositif de commutation (20) comporte des régulateurs électroniques de courant (17 à 19) en nombre correspondant au nombre des phases de l'enroulement d'induit, dont un est respectivement en série avec une phase (11 à 13) de l'enroulement d'induit (10), et en ce que l'étage logique (23) comporte un compteur annulaire (37) avec une capacité de comptage correspondante au nombre des phases de l'enroulement d'induit (10), et dont les sorties de comptage sont reliées en parallèle aux entrées de commande dos régulateurs de courant (17 à 19), tandis qu'à son entrée de comptage s'appliquent, indirectement ou directement, on tant qu'impulsions de comptage, les impulsions rectangulaires émises par l'oscillateur (27).
